# EUROPÄISCHE PATENTANMELDUNG

(11) **EP 1 788 685 A2**
(43) Veröffentlichungstag der Anmeldung: **23.05.2007**
(21) Anmeldenummer: 06023400.2
(22) Anmeldetag: 10.11.2006
(51) Int. Cl.: H02H 7/08, H02P 6/16

(54) **Elektronikeinheit zur Steuerung und/oder Regelung eines elektrischen Antriebsmotors**

(30) Priorität: 17.11.2005 DE 102005055274; 10.06.2006 DE 102006027091
(71) Anmelder: Diehl AKO Stiftung & Co. KG, 88239 Wangen (DE)
(72) Erfinder: Weinmann, Martin, 88339 Bad Waldsee (DE)
(74) Vertreter: Diehl Patentabteilung

(57) **Zusammenfassung**

Elektronikeinheit (1) zur Steuerung und / oder Regelung eines elektrischen Antriebsmotors, mit einem Sollwertgeber zur Vorgabe einer Solldrehzahl für den Antriebsmotor, mit einem einer Drehachse des Antriebsmotors zugeordneten Drehgeber (9) zur Messung einer Istdrehzahl und mit einer mit dem Drehgeber (9) verbundenen Verarbeitungseinheit zur Erfassung der Istdrehzahl, wobei die Verarbeitungseinheit dafür eingerichtet ist, bei einer unerwarteten Istdrehzahl eine Maßnahme zum Schutz des Antriebsmotors einzuleiten, wobei eine vom Drehgeber (9) unabhängige Erfassungseinheit zur Erfassung einer einen Betriebszustand des Antriebsmotors kennzeichnenden Messgröße vorgesehen ist, und wobei die Verarbeitungseinheit dafür eingerichtet ist, die Maßnahme zum Schutz des Antriebsmotors in Abhängigkeit von der erfassten Messgröße einzuleiten.

## Beschreibung

Die Erfindung bezieht sich auf eine Elektronikeinheit zur Steuerung und / oder Regelung eines elektrischen Antriebsmotors gemäß dem Oberbegriff von Anspruch 1.

Eine derartige Elektronikeinheit umfasst einen Sollwertgeber zur Vorgabe einer Solldrehzahl für den Antriebsmotor und zur Erzeugung eines mit der Solldrehzahl korrelierenden Steuersignals, einen einer Drehachse des Antriebsmotors zugeordneten Drehgeber zur Messung einer Istdrehzahl und eine mit dem Drehgeber verbundene Verarbeitungseinheit zur Erfassung der Istdrehzahl, wobei die Verarbeitungseinheit dafür eingerichtet ist, bei einer unerwarteten Istdrehzahl eine Maßnahme zum Schutz des Antriebsmotors einzuleiten.

Eine solche Elektronikeinheit ist beispielsweise aus der DE 35 20 099 A1 und der EP 0 499 123 A2 bekannt. Dort wird jeweils die Drehzahl des Antriebsmotors mittels eines Halbleiterbauelements gesteuert. Aus einer unerwarteten Istdrehzahl wird auf einen Defekt des Halbleiterbauelements geschlossen. Als Maßnahme zum Schutz des hochlaufenden Antriebsmotors wird der Motorstromkreis unterbrochen.

In der DE 35 20 099 A1 wird eine Sicherheitseinrichtung für ein über einen elektrischen Antriebsmotor betriebenes Werkzeug vorgeschlagen. Hier wird mittels einer Elektronikeinheit über einen Drehgeber die Drehzahl des Antriebsmotors gemessen. Bei Überschreiten einer vorgegebenen Maximaldrehzahl wird ein Relais ausgelöst, das den Motorstromkreis unterbricht.

Aus der EP 0 499 123 A2 ist ein Verfahren zum Schutz gegen eine überhöhte Drehzahl des Antriebsmotors insbesondere bei Haushaltswaschmaschinen angegeben. Auch hier wird die Drehzahl gemessen und bei Überschreiten einer vorgegebenen Maximaldrehzahl der Antriebsmotor außer Betrieb gesetzt. Zusätzlich erfolgt eine schaltungstechnische Verriegelung, so dass eine erneute Inbetriebnahme des Antriebsmotors bzw. der Haushaltswaschmaschine nicht durchführbar ist. Hierdurch ist ein zusätzlicher Schutz vor mechanischer Beschädigung gegeben.

Weiter ist in der DE 37 43 396 A1 eine Elektronikeinheit zum Schutz eines drehzahlgesteuerten Antriebsmotors einer Haushaltswaschmaschine angegeben. Zur Vermeidung eines unerwünschten Hochlaufens des Antriebsmotors wird dort das steuernde Halbleiterbauelement auf einen Kurzschluss überwacht. Die Schaltungsanordnung ist derart ausgeführt, dass bei Feststellen eines Kurzschlusses ein Betrieb nur noch mit einer vorgegebenen Versorgungsspannung für den Stator des Antriebsmotors möglich ist. Infolgedessen dreht sich der Rotor des Antriebsmotors nur noch mit einer durch die Versorgungsspannung vorgegebenen Drehzahl. Auf diese Weise sind mechanische Beschädigungen vermieden. Außerdem ist ein eingeschränkter Betrieb der Haushaltswaschmaschine möglich. Dies heißt, dass bei einer Haushaltswaschmaschine mit einer derartigen Schaltungsanordnung das Anwählen eines Schleuderprogrammes weiterhin möglich ist, wenn auch nicht mit der maximalen Drehzahl. Auf diese Weise ist ein Betrieb der Haushaltswaschmaschine auch dann möglich, wenn der Fehler nicht sofort behoben wird.

Aus der EP 0 362 496 A2 ist eine Steuerschaltung für einen elektrischen Antriebsmotor bekannt, bei der durch entsprechendes Beschalten von den Antriebsmotor zugeordneten Wende-Umschaltkontakten ein Kurzschluss am Halbleiterbauelement erkannt wird, indem ein Sicherungselement anspricht. Durch das Sicherungselement wird der Motorstromkreis unterbrochen. Auf diese Weise ist eine Beschädigung des Antriebsmotors oder des technischen Gerätes, in das der Antriebsmotor verbaut ist, sicher vermieden. Eine erneute Inbetriebnahme ist erst dann möglich, wenn der Defekt am Halbleiterbauelement behoben ist.

In der DE 34 32 845 A1 ist eine Elektronikeinheit zur Steuerung eines Universalmotors beschrieben, mit welcher ein Defekt eines einen Antriebsmotor steuernden Halbleiterbauelements erkannt wird. Die dort beschriebene Elektronikeinheit beinhaltet eine Vergleichsschaltung, bei der zum Halbleiterbauelement des Antriebsmotors ein zweites Halbleiterbauelement ohne Last parallel geschalten wird. Beide Halbleiterbauelemente erhalten das gleiche Steuersignal und sind über einen Komparator miteinander verschalten. Im Fall eines Defektes des Halbleiterbauelements des Motors fällt an diesem eine andere Spannung ab als an dem zweiten, parallel geschaltenen Halbleiterbauelement. Dieser unterschiedliche Spannungsabfall wird mit Hilfe der Komparatorschaltung registriert und führt zum Auslösen einer Sicherung, die den Motorstromkreis unterbricht.

In der DE 10 122 877 ist schließlich ein Verfahren zum Schutz einer Motorsteuerung eines Antriebsmotors angegeben, wobei die Elektronikeinheit einen Mikrocontroller zur Motorsteuerung verwendet. Die Ansteuerung des Antriebsmotors geschieht, indem der Mikrocontroller wechselseitig zwei Wende-Umschaltkontakte schaltet. Bei einem Defekt des Mikrocontrollers werden beide Umschaltkontakte gleichzeitig geschalten. In diesem Fall ist eine Beschädigung der Umschaltkontakte und nachgelagert eine Beschädigung des Halbleiterbauelements möglich. Das beschriebene Verfahren zum Schutz der Motorsteuerung überprüft daher die vom Mikrocontroller ausgegebenen Schaltzustände über eine Logikschaltung. Im Fehlerfall erfolgt eine Abschaltung des Halbleiterbauelements und damit des Antriebsmotors. Auf diese Weise wird eine Beschädigung des Halbleiterbauelements bereits im Vorfeld sicher vermieden.

Bis auf das letzte geschilderte Verfahren, das die Funktionsweise des Mikrocontrollers überprüft, zielen alle weiteren angegebenen Verfahren des Standes der Technik darauf ab, Maßnahmen zum Schutz des Antriebsmotors erst bei einer Beschädigung des Halbleiterelements einzuleiten bzw. ein unkontrolliertes Hochlaufen des Antriebsmotors auf eine Beschädigung des Halbleiterbauelements zurückzuführen.

Der Erfindung liegt daher die Aufgabe zugrunde, eine Elektronikeinheit zur Steuerung und/oder Regelung eines elektrischen Antriebsmotors anzugeben, die einen Betriebszustand des Antriebsmotors möglichst zuverlässig feststellt und bei unerwarteten Istdrehzahlen entsprechende Schutzmaßnahmen einleitet.

Diese Aufgabe wird für eine Elektronikeinheit der eingangs genannten Art erfindungsgemäß dadurch gelöst, dass eine vom Drehgeber unabhängige Erfassungseinheit zur Erfassung einer einen Betriebszustand des Antriebsmotors kennzeichnenden Messgröße vorgesehen ist, und dass die Verarbeitungseinheit dafür eingerichtet ist, die Maßnahme zum Schutz des Antriebsmotors in Abhängigkeit von der erfassten Messgröße einzuleiten.

Die Erfindung geht dabei von der Überlegung aus, dass bisherig aus einer unerwarteten lstdrehzahl auf einen Fehler des den Antriebsmotor steuernden Halbleiterbauelements geschlossen wurde. Um eine Beschädigung des Antriebsmotors zu verhindern, wurde in Folge der Motorstromkreis unterbrochen. Eine unerwartete Istdrehzahl kann jedoch auch von einem defekten Drehgeber oder von defekten weiteren Bauteilen der Elektronikeinheit rühren.

Ist jedoch eine vom Drehgeber unabhängige Erfassungseinheit zur Erfassung einer einen Betriebszustand des Antriebsmotors kennzeichnenden Messgröße vorgesehen, so kann aus einem Vergleich der Istdrehzahl mit den zugehörigen Werten der Messgröße zuverlässig auf den tatsächlichen Fehler bzw. den tatsächlichen Betriebszustand des Antriebsmotors geschlossen werden. Als Ergebnis kann eine entsprechend wirkungsvolle Schutzmaßnahme eingeleitet werden. Insbesondere wird der tatsächliche Betriebszustand des Antriebsmotors sicher auch dann erfasst, wenn der Drehgeber ausfällt. Der tatsächliche Betriebszustand kann nämlich in diesem Fall aus den Werten der weiteren erfassten Messgröße abgeleitet werden.

Die Erfindung erlaubt es somit unter Beachtung der kennzeichnenden Messgröße, die Istdrehzahlerfassung des Drehgebers zu unterstützen und einen Fehler im Motorstromkreis einzugrenzen. Zum anderen ist auch möglich, bei einem Ausfall des Drehgebers bei an sich funktionsfähigem Motorstromkreis aus den erfassten Werten der weiteren den Betriebszustand des Antriebsmotors charakterisierenden Messgröße den Antriebsmotor für einen gewissen Zeitraum gegebenenfalls unter Verlust der Regelgenauigkeit weiter zu steuern bzw. zu regeln. Die Verarbeitungseinheit ist zudem in der Lage, eine Maßnahme zum Schutz des Antriebsmotors auch ohne das Messsignal des Drehgebers einzuleiten, falls die Werte der kennzeichnenden Messgröße in unerwarteter Weise abweichen.

Zweckmäßig ist die Erfassungseinheit derart eingerichtet, Messwerte fortlaufend an die Verarbeitungseinheit zu übergeben, wobei die Verarbeitungseinheit zur Verarbeitung dieser Messwerte eingerichtet ist. Auf diese Weise ist der Betriebszustand des Antriebsmotors jederzeit durch eine weitere kennzeichnende Messgröße neben der Drehzahl charakterisierbar, wobei es besonders vorteilhaft ist die Drehzahl mit einem Drehgeber zu messen. Es stehen daher für die Einleitung von Maßnahmen zum Schutz des Antriebsmotors weitere Informationen zur Verfügung, so dass die Maßnahmen feiner abgestimmt erfolgen können.

In einer Weiterbildung ist in der Verarbeitungseinheit zu einer Solldrehzahl jeweils ein korrespondierender Messgrößenbereich für die weitere kennzeichnende Messgröße hinterlegt. Dies kann beispielsweise in Form einer in einem Datenspeicher der Verarbeitungseinheit abgelegten Wertetabelle oder eines entsprechenden funktionalen Zusammenhangs erfolgen. Die Verarbeitungseinheit ist eingerichtet, für den Fall, dass die Messgröße außerhalb des jeweiligen Messgrößenbereichs liegt; die Maßnahme zum Schutz des Antriebsmotors einzuleiten. Die Einleitung einer drehzahlabhängigen Schutzmaßnahme kann entweder bei Überschreiten einer vorgegebenen Maximaldrehzahl oder für den Fall erfolgen, wenn die Regelung der Istdrehzahl auf die Solldrehzahl über einen vorgegebenen Zeitraum nicht möglich ist.

Zweckmäßig ist die Verarbeitungseinheit eingerichtet, aus der erfassten Messgröße die Istdrehzahl zu errechnen. Damit liegt auch bei Ausfall des Drehgebers eine zuverlässige Information über die momentane Drehzahl des Antriebsmotors vor.

In einer Weiterbildung ist die Verarbeitungseinheit eingerichtet, die aus der Messgröße errechnete Istdrehzahl zur Generierung des Steuersignals zu verwenden. Somit kann selbst bei Ausfall des Drehgebers ein ordnungsgemäßer und störungsfreier Betrieb des Antriebsmotors gewährleistet werden, indem die erfasste Messgröße zur Steuerung und/oder Regelung des Antriebsmotors herangezogen wird.

Zweckmäßig ist die Verarbeitungseinheit dafür eingerichtet, als Maßnahme zum Schutz des Antriebsmotors ein Schaltsignal zu generieren. Das Schaltsignal liegt in der Elektronikeinheit als elektrisches Signal vor. Mit diesem Schaltsignal sind elektrische Schaltvorgänge durchführbar, die den Antriebsmotor vor Beschädigung schützen und / oder einem Benutzer eine Störung anzeigen.

Vorteilhafterweise ist das Schaltsignal geeignet, den Motorstromkreis zu unterbrechen. Dies kann beispielsweise durch eine entsprechende Ansteuerung von Wende-Umschaltkontakten, insbesondere von Relais, geschehen, die die Ankerwicklung zur Drehrichtungsänderung umpolen. Durch entsprechendes Ansteuern der Wenderelais kann der Motorstromkreis unterbrochen werden. Alternativ kann, insbesondere bei Gleichstrombetrieb des Motors, auch ein Schaltelement in den Motorstromkreis eingesetzt werden, welches bei Beaufschlagung mit dem Schaltsignal den Motorstromkreis unterbricht. Schließlich kann das Schaltsignal auch als Teil des Steuersignals zu einer Sperrung des den Antriebsmotor steuernden Halbleiterbauelements dienen. Somit ist ein eindeutiger Schutz des Antriebsmotors vor mechanischer Beschädigung, insbesondere auch bei einem Ausfall des Drehgebers, gewährleistet.

Zweckmäßigerweise ist ein mit der Verarbeitungseinheit verbundenes Anzeigeelement vorgesehen, welches bei Generierung des Warnsignals eine Betriebsstörung anzeigt. Ein derartiges Anzeigeelement weist einen Benutzer insbesondere zusätzlich zu weiter eingeleiteten Schutzmaßnahmen zielgerichtet auf eine vorliegende Störung hin. Als Anzeigeelement können beispielsweise eine oder mehrere Leuchtanzeigen vorgesehen sein. Zweckmäßig ist auch der Einsatz einer Sichtanzeige, wie beispielsweise einer LCD-Anzeige, da auf diese Weise eine textliche Beschreibung eines Fehlers möglich ist.

In einer vorteilhaften Variante ist die Erfassungseinheit zur Erfassung einer oder mehrerer Spannungen als Messgröße eingerichtet. Die Verarbeitung eines gemessenen Spannungswertes ist schaltungstechnisch unkompliziert. Zum Spannungsabgriff brauchen die entsprechenden Verbindungsleitungen lediglich hochohmig den entsprechenden Eingängen eines in der Verarbeitungseinheit integrierten Messgeräts zugeführt werden. Auf diese Weise kann als Verarbeitungseinheit leicht ein Mikrocontroller eingesetzt werden. Weitere aufwändige Eingriffe in den Schaltungsaufbau sind nicht nötig. Daher lässt sich eine Spannungsmessung besonders kostengünstig realisieren. Die Messung von Spannungen bietet sich bevorzugt an Komponenten im Motorstromkreis an, an denen ein vom Betriebszustand des Antriebsmotors abhängiger signifikanter Spannungsabfall messbar ist.

In der Verarbeitungseinheit ist insbesondere für jede der gemessenen Spannungen der zu einer Solldrehzahl korrespondierende Spannungsbereich hinterlegt. Liegt die gemessene Spannung außerhalb dieses hinterlegten Spannungsbereiches, so wird eine Maßnahme zum Schutz des Antriebsmotors eingeleitet. Insbesondere lässt sich auf diese Weise bei der Erfassung des Spannungsabfalls über das den Antriebsmotor steuernde Halbleiterbauelement eine fehlerhafte Ansteuerung oder eine Durchlegierung, d.h. eine Beschädigung, detektieren.

Weiterhin zweckmäßig ist es, den Spannungsabfall am Anker des Antriebsmotors zu messen. Wird die über dem Anker abfallende Spannung in einem Sperrzustand des den Antriebsmotor steuernden Halbleiterbauelements gemessen, so erlaubt dies einen Rückschluss auf den Betriebszustand. Bei einem Sperrzustand des Halbleiterbauelements wird nämlich am Anker infolge der Restremanenz von Anker und Stator durch das Weiterdrehen des Ankers eine als Gleichspannung abzugreifende Spannung induziert, der ein geringer Wechselspannungsanteil überlagert ist. Aus dem Gleichspannungsanteil als eine drehzahlproportionale Größe kann auf die Drehzahl des Antriebsmotors geschlossen werden. Aus dem Wechselspannungsanteil kann durch eine Auswertung der Amplitude, des Betrags oder der Frequenz auf die Drehzahl geschlossen werden.

Weiter kann die Spannungsmessung am Stator des Antriebsmotors vorgenommen werden. Da der Anker des Antriebsmotors im Magnetfeld des Stators rotiert, wird im Stator während des Normalbetriebs eine Wechselspannung induziert. Diese induzierte Wechselspannung kann insbesondere leicht während einer Sperrphase des Halbleiterbauelements gemessen werden. Die am Stator gemessene induzierte Wechselspannung ist eine drehzahlproportionale Messgröße, die auch hinsichtlich ihrer Amplitude, ihrem Betrag und ihrer Frequenz zur Berechnung der Drehzahl des Antriebsmotors ausgewertet werden kann.

Vorteilhafterweise wird der Spannungsabfall über den gesamten Motor, insbesondere während einer Sperrphase des Halbleiterbauelements, gemessen. Hierbei wird der Spannungsabfall am Anker und am Rotor gemeinsam erfasst. Bei einem Reihenschlussmotor addieren sich zudem die Spannungen von Stator und Rotor bzw. Anker, so dass sich der messbare Spannungsabfall vergrößert.

Ein unidirektionaler Stromfluss am Halbleiterbauelement führt zu einer Asymmetrie der Motorspannungen. Dies ist wiederum durch eine Spannungsmessung an Stator, Rotor und/oder Motor detektierbar.

Vorteilhaft ist es außerdem - wie bereits erwähnt -, die am Halbleiterbauelement abfallende Spannung zu messen. Diese Spannung korreliert im störungsfreien Betrieb mit dem Steuersignal des Sollwertgebers. Im Fehlerfall liegt diese Korrelation nicht mehr vor, was einen Hinweis auf einen Defekt des Halbleiterbauelements darstellt. Als Halbleiterbauelement kann insbesondere ein Wechselspannungsschalter wie ein Triac fungieren. Beispielsweise kann sich ein Triac im Fehlerfall als eine Diode oder als Thyristor verhalten. Ein derartiges elektrisches Verhalten ist über den Spannungsabfall leicht zu detektieren.

In einer vorteilhaften Weiterbildung ist die Verarbeitungseinheit ein Mikrocontroller. Derartige Mikrocontroller sind besonders kostengünstig herstellbar. Außerdem vereinigen sie viele integrierte Schaltkreise auf sehr kleinem Raum, so dass die gesamte Elektronikeinheit baulich besonders kompakt ausführbar ist.

In einer vorteilhaften Variante ist die Verbindung der Verarbeitungseinheit mit dem Drehgeber redundant ausgeführt. Falls eine der beiden Verbindungen zwischen Drehgeber und Verarbeitungseinheit fehlerhaft ist, wird mittels der zweiten Verbindung dennoch die Drehzahl des Drehgebers weiterhin erfasst und steht in der Verarbeitungseinheit für Regelaufgaben zur Verfügung. Im Falle eines Mikrocontrollers kann zur redundanten Ausführung einfach ein zweiter Eingang verwendet werden.

In einer besonders vorteilhaften Ausgestaltung ist die durch die Restremanenz im Anker oder im Stator induzierte Spannung nach Betrag und Frequenz durch die Verarbeitungseinheit auswertbar.

Nachfolgend wird ein Ausführungsbeispiel der Erfindung anhand einer Zeichnung näher erläutert.

Die nachfolgenden Ausführungen sind analog auf einen mit Gleichspannung gespeisten Universalmotor, der über einen Transistor anstelle über einen Triac gesteuert wird übertragbar.

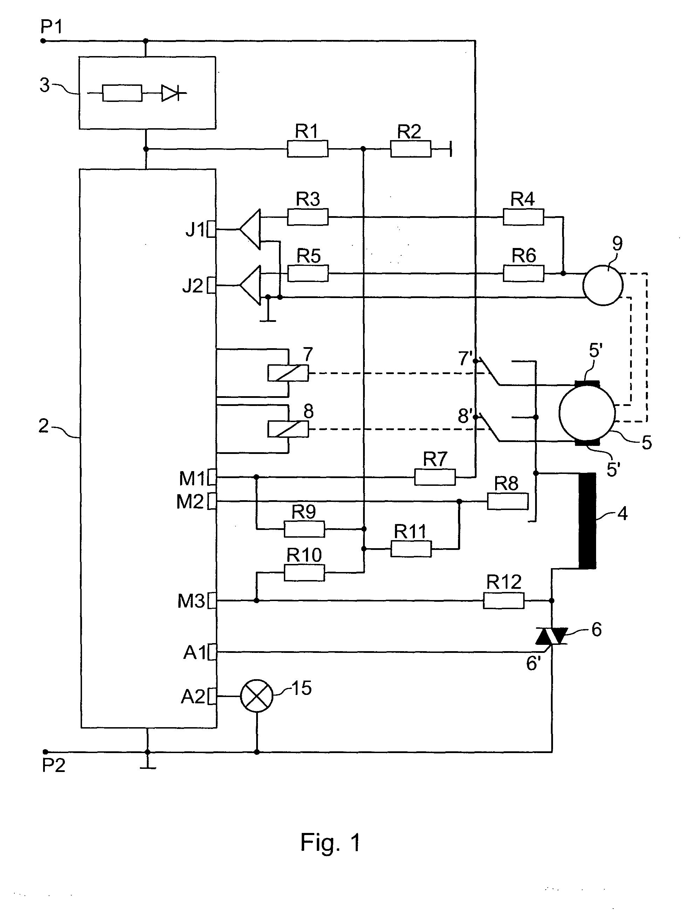

Die einzige Figur zeigt schematisch eine Elektronikeinheit 1 für einen elektrischen Antriebsmotor, der aus dem Wechselspannungsnetz mittels Triac gespeist wird. Die Elektronikeinheit 1 wird über eine Netzspannung zwischen den Phasen P1 und P2 mit elektrischer Energie versorgt. Ein Mikrocontroller 2 ist zur Verarbeitung analoger und digitaler Eingangssignale ausgebildet. Zudem generiert der Mikrocontroller 2 Ausgangssignale zur Steuerung und/oder Regelung des elektrischen Antriebsmotors. Die elektrische Versorgung der Elektronikeinheit 1 geschieht mittels einer Versorgungseinheit 3.

Bei dem elektrischen Antriebsmotor handelt es sich um einen Reihenschlussmotor, d.h. ein Stator 4 und ein Anker 5 sind in Reihe geschalten. Der Stator 4 ist in der Zeichnung lediglich schematisch als Rechteck gezeichnet. Er generiert über eine Feldwicklung ein Magnetfeld, in dem sich der drehbeweglich gelagerte, stromdurchflossene Anker 5 dreht. Die Stärke dieses Magnetfeldes wird über den Mikrocontroller 2 vorgegeben. Dazu generiert der Mikrocontroller 2 ein Steuersignal, das er an einem Ausgang A1 ausgibt und mit dem er eine Steuerelektrode 6' eines als Triac ausgebildeten Halbleiterbauelements 6 ansteuert. Zur Drehzahlsteuerung wird eine Phasenanschnittsteuerung verwendet. Dabei hat das Halbleiterbauelement 6 die Funktion eines Schalters derart, dass lediglich ein Teil einer Sinushalbwelle des ihn durchdringenden Wechselstroms über seine Steuerelektrode 6' hinduchgelassen wird. Durch Verschieben des Anschnittpunktes der Halbwelle wird die Spannung und damit der Motorstrom dem geforderten Motordrehmoment angepasst, um auf die gewünschte Drehzahl zu regeln.

Außerdem steuert der Mikrocontroller 2 ein erstes Relais 7,7' und ein zweites Relais 8,8' wechselseitig an, wodurch die Drehrichtung des Ankers 5 vorgegeben ist. Die Kontaktierung des Ankers 5 erfolgt über Bürstenkontakte 5'.

Der Anker 5 oder Rotor weist eine Drehachse (in der Figur nicht dargestellt) auf, um die er drehbeweglich gelagert ist. Auf der Drehachse des Ankers 5 ist ein Drehgeber 9, beispielsweise ein Tacho, angeordnet. Die Zuordnung des Drehgebers 9 zum Anker 5 ist in der Zeichnung durch zwei gestrichelte Linien verdeutlicht. Der Drehgeber 9 weist zwei unabhängige Messleitungen 10,11 auf, die über Komparatoren 12,13 mit dem Nullpotential 14 des Drehgebers 9 verbunden sind. Die Widerstände R3 bis R6 dienen der Anpassung der Messsignale. Die redundante Ausführung der Messanordnung mit zwei unabhängigen Messleitungen 10,11 gewährleistet auch bei Ausfall einer der beiden Messleitungen 10,11 durch einen Kurzschluss oder eine Unterbrechung, dass die Drehzahl des Ankers 5 erfassbar ist.

Die beiden Messsignale werden mittels der Eingänge I1,I2 vom Mikrocontroller 2 erfasst. Der Mikrocontroller 2 errechnet aus den Messsignalen eine jeweilige Istdrehzahl des Ankers 5. Er ist ausgeführt, eine Abweichung der Istdrehzahl von der Solldrehzahl zu registrieren. Bei Abweichung der Istdrehzahl von der Solldrehzahl um einen vorgegebenen Wert erfolgt über den Ausgang A1 eine Anpassung des an der Steuerelektrode 6' des Halbleiterbauelements 6 anlangenden Steuersignals. Somit ändert sich das Magnetfeld des Stators 4 und damit auch die auf den Anker 5 wirkende magnetische Kraft, was zu einer Änderung der Umdrehungsgeschwindigkeit und damit der Drehzahl des Ankers 5 führt. Dieser Vorgang läuft kontinuierlich ab, d.h. die Istdrehzahl des Ankers 5 wird laufend gemessen, im Mikrocontroller 2 überprüft und gegebenenfalls angepasst.

Zusätzlich zur Erfassung der Drehzahl des Ankers 5 mittels des Drehgebers 9 wird der Spannungsabfall an insgesamt vier Komponenten im Motorstromkreis gemessen. Die entsprechenden Spannungssignale sind hochohmig gegen den Innenwiderstand auf die Messeingänge M1, M2 und M3 des Mikrocontrollers 2 geschaltet. Die Widerstände R7 bis R12 dienen dabei jeweils der Anpassung der Messsignale. Mittels der Messeingänge M1 und M2 wird der Spannungsabfall am Anker 5, mittels der Messeingänge M2 und M3 wird der Spannungsabfall am Stator 4 und mittels der Messeingänge M1 und M3 wird der Spannungsabfall über dem gesamten elektrischen Antriebsmotor erfasst. Alle drei Spannungswerte werden während einer Sperrphase des Halbleiterbauelements 6 gemessen. Infolge der Restremanenz im Anker 5 und in den Motorblechen des Stators 4 wird aufgrund der Trägheitsdrehung des Ankers 5 im Magnetfeld des Stators 4 in dem Anker 5 eine Gleichspannung und in dem Stator 4 eine Spannung induziert. Der Mikrocontroller 2 leitet aus der Gleichspannung als eine drehzahlproportionale Größe direkt und aus der Wechselspannung durch Auswertung der Amplitude, des Betrags oder der Frequenz indirekt die Drehzahl des Antriebsmotors ab. Im Mikrocontroller 2 ist für jede vom Sollwertgeber vorgegebene Solldrehzahl ein Messbereich hinterlegt, in dem die gemessenen Spannungen liegen müssen, um einen ordnungsgemäßen Betrieb des elektrischen Antriebsmotors anzuzeigen.

In einer zusätzlichen Messanordnung wird zwischen dem Eingang M3 und der Phase P2 der Elektronikeinheit 1 die am Halbleiterbauelement 6 abfallende Spannung gemessen. Liegt entsprechend dem an A1 ausgegebenen Steuersignal der gemessene Spannungsabfall am Halbleiterbauelement 6 außerhalb des bei einem regulären Verhalten zu erwartenden Messgrößenbereich, so wird im Mikrocontroller 2 auf einen Defekt des Halbleiterbauelements 6 geschlossen.

Liegt die vom Drehgeber 9 erfasste Istdrehzahl außerhalb des zulässigen Drehzahlbereichs, so werden die am Stator 4, am Rotor 5 bzw. über den Antriebsmotor gemessenen Spannungswerte für eine Bewertung des tatsächlichen Betriebszustands des Antriebsmotors herangezogen. Liegen diese Spannungswerte jeweils innerhalb des mit der Solldrehzahl korrespondierenden Wertebereiches, so wird über den Ausgang A2 eine Warnlampe 16 geschaltet, die einem Benutzer eine Betriebsstörung der Elektronikeinheit anzeigt und der Benutzer über eine zugeordnete Sichtanzeige gegebenenfalls zum Kontaktieren eines Wartungsdienstes aufgefordert. Bei einer derartigen Betriebsstörung ist z.B. der Drehgeber 9 oder die drehgeberabhängige Steuerung im Mikrocontroller 2 ausgefallen. Der Mikrocontroller 2 kann in diesem Fall überbrückungsweise die gemessenen Spannungssignale zur weiteren Regelung/Steuerung des Antriebsmotors übernehmen.

Liegt mindestens einer der genannten Spannungswerte außerhalb seines mit der Solldrehzahl korrespondierenden Wertebereiches, so schließt der Mikrocontroller 2 auf einen Defekt im Halbleiterbauelement 6. Als eine Maßnahme zum Schutz des Antriebsmotors wird der Motorstromkreis unterbrochen. Hierzu werden die beiden Relais 7,7' und 8,8' derart geschaltet, dass der Motorstromfluss unterbrochen ist. Alternativ wird das Halbleiterbauelement 6 mittels eines entsprechenden Schaltsignals dauerhaft gesperrt. Über die Sichtanzeige wird der Benutzer zum Abschalten aufgefordert.

Die am Halbleiterbauelement 6 gemessenen Spannungswerte dienen einer zusätzlichen Kontrolle des vermuteten Betriebszustandes des Antriebsmotors.

Mittels der hier geschilderten zusätzlichen Spannungsmessungen verringert sich das Risiko einer mechanischen Beschädigung des elektrischen Antriebsmotors. Ein unkontrolliertes Hochlaufen des elektrischen Antriebsmotors infolge eines Defekts am Halbleiterbauelement 6 wird sicher vermieden. Fehler in der Elektronikeinheit 1, die zu einer unerwarteten Drehzahl des Antriebsmotors führen, können identifiziert werden. Je nach identifiziertem Fehler wird die entsprechende geeignete Schutzmaßnahme ergriffen.

### Bezugszeichenliste

- 1: Elektronikeinheit
- 2: Mikrocontroller
- 3: Versorgungseinheit
- 4: Stator
- 5: Anker
- 5': Bürstenkontakte
- 6: Halbleiterbauelement
- 6': Steuerelektrode
- 6": Ausgang zur Ansteuerung der Steuerelektrode
- 7,7': erstes Relais
- 8,8': zweites Relais
- 9: Drehgeber
- 10: erste Messleitung
- 11: zweite Messleitung
- 12: erster Komparator
- 13: zweiter Komparator
- 14: Nullpotential
- 15: Warnlampe
- P1,P2: Phasen
- M1: erster Messeingang
- M2: zweiter Messeingang
- M3: dritter Messeingang
- R1 - R12: Widerstände

## Patentansprüche

1. Elektronikeinheit (1) zur Steuerung und / oder Regelung eines elektrischen Antriebsmotors, mit einem Sollwertgeber zur Vorgabe einer Solldrehzahl für den Antriebsmotor, mit einem einer Drehachse des Antriebsmotors zugeordneten Drehgeber (9) zur Messung einer Istdrehzahl und mit einer mit dem Drehgeber (9) verbundenen Verarbeitungseinheit zur Erfassung der Istdrehzahl, wobei die Verarbeitungseinheit dafür eingerichtet ist, bei einer unerwarteten Istdrehzahl eine Maßnahme zum Schutz des Antriebsmotors einzuleiten,
**dadurch gekennzeichnet,**
**dass** eine vom Drehgeber (9) unabhängige Erfassungseinheit zur Erfassung einer einen Betriebszustand des Antriebsmotors kennzeichnenden Messgröße vorgesehen ist, und dass die Verarbeitungseinheit dafür eingerichtet ist, die Maßnahme zum Schutz des Antriebsmotors in Abhängigkeit von der erfassten Messgröße einzuleiten.

2. Elektronikeinheit (1) nach Anspruch 1,
**dadurch gekennzeichnet,**
**dass** die Erfassungseinheit dafür eingerichtet ist, Messwerte fortlaufend an die Verarbeitungseinheit zu übergeben, und dass die Verarbeitungseinheit zur Verarbeitung der Messwerte eingerichtet ist.

3. Elektronikeinheit (1) nach Anspruch 2
**dadurch gekennzeichnet,**
**dass** in der Verarbeitungseinheit zu einer Solldrehzahl jeweils ein korrespondierender Messgrößenbereich hinterlegt ist, und dass die Verarbeitungseinheit eingerichtet ist, für den Fall, dass die Messgröße außerhalb des jeweiligen Messgrößenbereichs liegt, die Maßnahme zum Schutz des Antriebsmotors einzuleiten.

4. Elektronikeinheit (1) nach einem der vorherigen Ansprüche,
**dadurch gekennzeichnet,**
**dass** die Verarbeitungseinheit eingerichtet ist, aus der erfassten Messgröße die Istdrehzahl zu errechnen.

5. Elektronikeinheit (1) nach Anspruch 4,
**dadurch gekennzeichnet,**
**dass** die Verarbeitungseinheit eingerichtet ist, die aus der Messgröße errechnete Istdrehzahl zur Generierung des Steuersignals zu verwenden.

6. Elektronikeinheit (1) nach einem der vorherigen Ansprüche,
**dadurch gekennzeichnet,**
**dass** die Verarbeitungseinheit dafür eingerichtet ist, als Maßnahme zum Schutz des Antriebsmotors ein Schaltsignal (A2) zu erzeugen.

7. Elektronikeinheit (1) nach Anspruch 6,
**dadurch gekennzeichnet,**
**dass** die Verarbeitungseinheit dafür eingerichtet ist, ein Schaltsignal zur Unterbrechung des Motorstromkreises zu erzeugen.

8. Elektronikeinheit (1) nach einem der Ansprüche 6 oder 7,
**dadurch gekennzeichnet,**
**dass** ein mit der Verarbeitungseinheit verbundenes Anzeigeelement vorgesehen ist, welches bei Generierung des Schaltsignals eine Betriebsstörung anzeigt.

9. Elektronikeinheit (1) nach einem der vorherigen Ansprüche,
**dadurch gekennzeichnet,**
**dass** die Erfassungseinheit zur Erfassung einer Spannung als Messgröße eingerichtet ist.

10. Elektronikeinheit (1) nach Anspruch 9,
**dadurch gekennzeichnet,**
**dass** der Erfassungseinheit ein Spannungsabgriff am Anker (5) des Antriebsmotors zugeordnet ist.

11. Elektronikeinheit (1) nach Anspruch 9 oder 10,
**dadurch gekennzeichnet,**
**dass** der Erfassungseinheit ein Spannungsabgriff am Stator (4) des Antriebsmotors zugeordnet ist.

12. Elektronikeinheit (1) nach Anspruch 10 und 11,
**dadurch gekennzeichnet,**
**dass** die Erfassungseinheit eingerichtet ist, die Summe der über den Anker (5) und den Stator (4) des Antriebsmotors abfallenden Spannung zu erfassen.

13. Elektronikeinheit (1) nach Anspruch 9,
**dadurch gekennzeichnet,**
**dass** ein Halbleiterbauelement (6), insbesondere ein Triac oder ein Transistor, zur Regelung und/oder Steuerung der Drehzahl vorgesehen ist, und dass der Erfassungseinheit ein Spannungsabgriff an dem Halbleiterbauelement (6) zugeordnet ist.

14. Elektronikeinheit (1) nach einem der vorhergehenden Ansprüche,
**dadurch gekennzeichnet,**
**dass** die Verarbeitungseinheit als ein Mikrocontroller (2) ausgebildet ist.

15. Elektronikeinheit (1) nach einem der vorhergehenden Ansprüche,
**dadurch gekennzeichnet,**
**dass** die Verbindung der Verarbeitungseinheit mit dem Drehgeber (9) redundant ausgeführt ist.

16. Elektronikeinheit (1) nach einem der vorhergehenden Ansprüche,
**dadurch gekennzeichnet,**
**dass** die durch die Restremanenz im Anker oder im Stator induzierte Spannung nach Betrag und Frequenz durch die Verarbeitungseinheit auswertbar ist.
